# EUROPÄISCHE PATENTSCHRIFT

(11) **EP 0 883 504 B1**
(45) Veröffentlichungstag und Bekanntmachung des Hinweises auf die Patenterteilung: **28.03.2001**
(21) Anmeldenummer: 97901568.2
(22) Anmeldetag: 17.01.1997
(51) Int. Cl.: B60G 11/00, B62D 65/00

(54) **VERFAHREN ZUR MONTAGE VON KONSTRUKTIONSEINHEITEN IN FAHRZEUGEN**
PROCESS FOR FITTING STRUCTURAL UNITS TO VEHICLES
PROCEDE DE MONTAGE D'UNITES DE CONSTRUCTION DANS DES VEHICULES

(30) Priorität: 08.03.1996 DE 19608999
(43) Veröffentlichungstag der Anmeldung: 16.12.1998
(73) Patentinhaber: AUDI AG, 85045 Ingolstadt (DE)
(72) Erfinder: MÜLLER, Anton, D-85101 Lenting (DE); ROTH, Franz, D-93336 Steinsdorf (DE)
(74) Vertreter: Geissler, Manfred
(86) Internationale Anmeldenummer: EP9700257
(87) Internationale Veröffentlichungsnummer: WO9732742

(56) Entgegenhaltungen:
- "Renault 20/30 Werkplaats reparatiehandboek M.R. 212" März 1979 , REGIE NATIONALE DES USINES RENAULT , FR XP002031723 siehe Seite J-6
- REIMPELL, J: "Fahrwerktechnik: Grundlagen" 1988 , VOGEL VERLAG , WÜRZBURG,DE XP002031724 siehe Seite 263 - Seite 267

## Beschreibung

Die Erfindung bezieht sich auf ein Verfahren zur Montage von Konstruktionseinheiten in einem Fahrzeug, insbesondere von Achsfedern gemäß Oberbegriff des Patentanspruches 1.

Die heutzutage den Kunden dargebotene Angebotspalette bei Kraftfahrzeugen, insbesondere bei Personenkraftfahrzeugen, ist ausgesprochen vielseitig. So bietet praktisch jeder Automobilhersteller verschiedene Fahrzeugtypen mit wiederum unterschiedlichen, z. B. durch das verbaute Antriebsaggregat näher definierten Modellvarianten an. Jedes Fahrzeugmodell wiederum weist eine gewisse Grundausstattung auf, die je nach Käuferwunsch bei der individuellen Fahrzeugbestellung durch mehr oder weniger gewichtsträchtige Sonderausstattungen (z. B. Klimaanlage, Standheizung, Schiebedach, Anhängevorrichtung, elektromotorisch betätigte Ausstattungselemente, usw.) ergänzt werden kann. Dies hat zur Folge, daß die einzelnen Fahrzeuge hinsichtlich Gesamtgewicht höchst unterschiedlich sein können.

Nun gibt es wiederum innerhalb des Gesamtaufbaues eines solchen Kraftfahrzeuges Konstruktionseinheiten, die hinsichtlich Dimensionierung und/oder Raumform auf das Fahrzeug-Gesamtgewicht abzustimmen sind. Als Beispiel hierfür sind die Achsfedern der Radaufhängungen anzusehen, die letztlich das Fahrzeuggewicht auf die Räder übertragen. Richtig gewählte (hinsichtlich Dimensionierung, Raumform, Werkstoffeigenschaften) Achsfedern wirken sich positiv auf die Standhöhen- und Radhausoptik, den cw-Wert, den Fahrkomfort, die Fahrstabilität usw aus.

In der Praxis ist es nun aber häufig so, daß entweder stets die gleichen Achsfedern verbaut werden, unabhängig vom tatsächlichen Ausstattungsumfang bzw. Gesamtgesicht des jeweiligen Fahrzeuges, oder daß die auf das Gesamtgewicht den größten Einfluß nehmenden Faktoren (z. B. das Antriebsaggregat) berücksichtigt und darauf abgestimmte und geeignete Achsfedern verbaut werden. Im Ergebnis wird so ein Kraftfahrzeug produziert, dessen Einzelkomponenten nicht optimal aufeinander abgestimmt sind.

Aus "Revue Technique Automobile", Nr. 536, Februar 1992, Etude technique et pratique Mercedes-Benz, 200, 230, 260, 300, Seiten 84, 85, 91 und 92, geht ein Verfahren zur Montage von Konstruktionseinheiten in einem Fahrzeug, insbesondere von Achsfedern, hervor, bei dem unter Berücksichtigung des Ausstattungsumfanges des Fahrzeuges eine Anzahl von Fahrzeug-Gewichtsklassen gebildet wird, wobei jeder Gewichtsklasse eine darauf abgestimmte Konstruktionseinheit zugeordnet und diese am Fahrzeug verbaut wird. Die Gewichtsklassen ergeben sich aus einem Punktesystem, welches eine relativ grobe Abstufung aufweist und beispielsweise auf verschiedene Bauformen ein und derselben Sonderausstattung (z. B. Automatikgetriebe) keine Rücksicht nimmt. Die so gebildeten "Gewichtsklassen" weisen einen nicht hinnehmbaren Streubereich auf.

Von daher liegt der Erfindung die Aufgabe zugrunde, das im Oberbegriff des Patentanspruches 1 angegebene Verfahren zur Montage von Konstruktionseinheiten in Fahrzeugen, insbesondere von Achsfedern, so zu verbessern, daß eine optimale Abstimmung auf die tatsächlichen Gegebenheiten erzielbar ist.

Dies gelingt erfindungsgemäß mit den weiteren Verfahrensschritten, wie sie im kennzeichnenden Teil des Patentanspruches 1 angegeben sind. Weiterbildungen der Erfindung sind in den Unteransprüchen dargelegt.

Mit der Erfindung gehen eine Reihe von Vorteilen einher. So ist, wenn es sich bei den Konstruktionseinheiten um die beispielhaft genannten Achsfedern handelt, eine deutlich verbesserte Standhöhenqualität (in engen Toleranzen eingehaltene Bodenfreiheit) aufgrund von Erfassung und Berücksichtigung der gewichtsrelevanten Sonderausstattungsumfänge gegeben. Ein Hoch-/Tiefniveau durch Minder-/Mehrgewicht wird vermieden. Auch können Ausstattungsumfänge von Sonderfahrzeugen (Polizei, Notarzt, usw.) und länderspezifische Ausstattungsumfänge berücksichtigt werden.

Treten während der laufenden Serie bei den einzelnen Ausstattungsumfängen beispielsweise aufgrund konstruktiver Abwandlungen Gewichtsänderungen auf, so läßt sich auch dies ohne weiteres berücksichtigen. Neben einer möglichen Variantenreduzierung der Konstruktionseinheiten (Achsfedern) läßt sich der Montageablauf insgesamt verbessern. Unterschiedliche Gewichte bei den ungefederten Massen (z. B. Räder, Reifen) brauchen dabei nicht berücksichtigt zu werden.

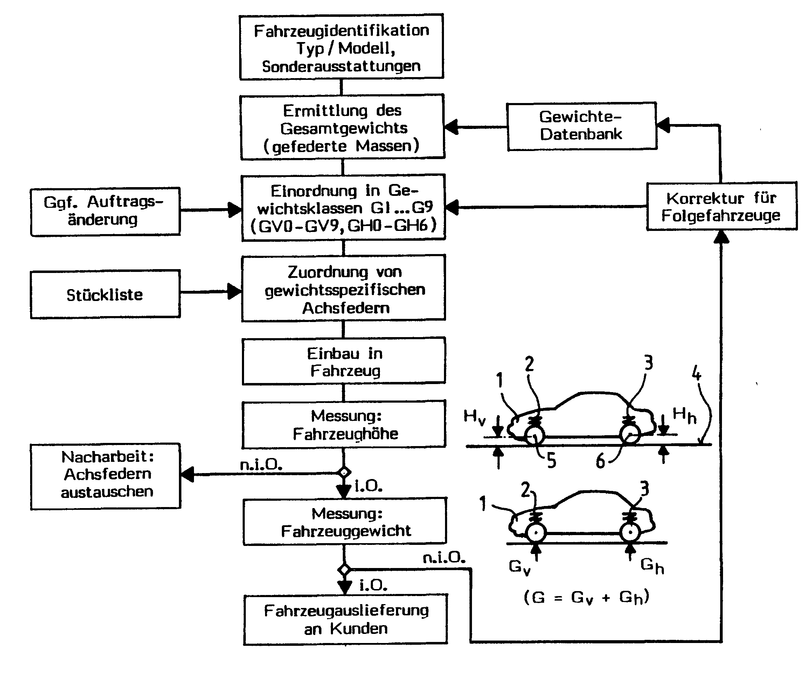

Die Erfindung ist anhand eines in der Zeichnung gezeigten Flußdiagrammes für ein Verfahren zur Montage von Achsfedern an Fahrzeug-Vorderachsen bzw. -Hinterachsen nachstehend näher erläutert.

Ausgangspunkt des Verfahrensablaufes ist die individuelle Fahrzeugbestellung und damit Auswahl eines bestimmten Fahrzeugmodelles und individuelle Zuordnung zusätzlicher Sonderausstattungen durch den Kunden.

Durch Heranziehen der Daten aus einer Gewichte-Datenbank, in der zu jedem Fahrzeugmodell und zur jeder Sonderausstattung das zugehörige Gewicht abgelegt ist, kann das hier relevante (also ohne Berücksichtigung der ungefederten Massen wie z. B. Felgen, Reifen) Gesamtgewicht ermittelt werden, und zwar vorzugsweise unterteilt nach dem der Vorderachse V und dem der Hinterachse H zufallenden Gewichtsanteil.

Ein Mindestgewicht ergibt sich durch das reine Fahrzeug-Grundmodell, ein Maximalgewicht ergibt sich durch Einbeziehung sämtlicher möglicher Sonderausstattungen. Die so entstehende Gewichts-Bandbreite wird, wiederum getrennt in Vorderachsanteil und Hinterachsanteil, in eine Anzahl von Gewichtsklassen GV0 - GV9 (Vorderachse) und GH0 - GH6 (Hinterachse) unterteilt. Somit ist jede Gewichtsklasse durch relativ eng beieinaneinanderliegende Mindest- und Maximalgewichte definiert, wobei es sich als sinnvoll erwiesen hat (z. B. wegen stark gewichtsträchtiger Ausstattungsvarianten im Bereich des Motorraumes) den Vorderachsbereich in eine größeren Anzahl von Gewichtsklassen einzuteilen, als dies im Hinterachsbereich erforderlich ist.

Nun ist jeder Gewichtsklasse GV0 - GV9, GH0 - GH6 eine hinsichtlich Dimension, Raumform und Werkstoff spezifizierte Achsfeder 2,3 zugeordnet, so daß durch Zugriff auf eine entsprechende Datei die genau passenden Achsfedern 2,3 ausgewählt und im Fahrzeug verbaut werden können. Soweit aufgrund Kundenwunsch eine nachträgliche Änderung hinsichtlich Sonderausstattungen zu berücksichtigen wäre, so könnte dies noch bis zu diesem relativ späten Zeitpunkt geschehen.

Am Ende des Montagevorganges durchläuft das Fahrzeug 1 eine Meßstation, in der die Standhöhen H_{V} und H_{H} (Abstand zwischen Boden 4 und Radmittelpunkt 5,6) ermittelt werden. Ergeben sich hier außerhalb einer vorgegebenen Toleranz liegende Meßwerte, so wäre im Rahmen einer Nacharbeit ein Austausch der Achsfedern 2,3 erforderlich. Ansonsten ist das Fahrzeug 1 für die Auslieferung an den Kunden bereit.

Der Standhöhenmessung kann ergänzend noch eine Gewichtsprüfung nachgeschaltet werden. Dabei findet ein Vergleich zwischen den errechneten Vorderachs- und Hinterachsgewichten GV,GH und den tatsächlich auf einer Waage ermittelten Gewichten statt. Bei unter- oder überschreiten gewisser Toleranzen (z. B. ± 100 N) kann eine Korrektur erfolgen und bei Folgefahrzeugen berücksichtigt werden.

## Patentansprüche

1. Verfahren zur Montage von Konstruktionseinheiten in einem Fahrzeug, insbesondere von Achsfedern, deren Dimensionierung und/oder Raumform und/oder Werkstoff in Abhängigkeit vom Fahrzeuggewicht bestimmt wird, wobei unter Berücksichtigung des Ausstattungsumfanges des Fahrzeuges eine Anzahl von Fahrzeug-Gewichtsklassen (GV0 - GV9, GH0 - GH6) gebildet wird und wobei jeder Gewichtsklasse (GV0 - GV9, GH0 - GH6) eine darauf abgestimmte Konstruktionseinheit (2,3) zugeordnet und diese am Fahrzeug (1) verbaut wird, dadurch gekennzeichnet,
• daß zunächst die Ermittlung des relevanten Fahrzeuggewichtes rechnerisch unter Heranziehung von in einer Datenbank abgelegten und den einzelnen Fahrzeug-Ausstattungselementen zugeordneten Einzelgewichten erfolgt und daß
• das Fahrzeug (1) danach einer Gewichtsklasse (GV0 - GV9, GH0 - GH6) zugeordnet wird.

2. Verfahren nach Anspruch 1, **gekennzeichnet durch** eine sich anschließende Standhöhenermittlung H_{V} und H_{H,} jeweils bezogen auf die Vorder- und Hinterachse.

3. Verfahren nach Anspruch 1, **gekennzeichnet durch** eine sich anschließende tatsächliche Ermittlung des Fahrzeuggewichts G_{V} und G_{H}, jeweils bezogen auf die Vorder- und Hinterachse auf einer Waage.

4. Verfahren nach Anspruch 3, **gekennzeichnet durch** die Berücksichtigung der ermittelten Meßwerte als Korrekturgrößen bei der rechnerischen Ermittlung des Fahrzeuggewichtes und damit bei der Gewichtsklassenzuordnung von Folgefahrzeugen.

## Claims

1. Method for assembling structural units in a vehicle, more particularly axle springs, the dimensions and/or spatial configuration and/or material of which is determined in dependence on the weight of the vehicle, with a number of vehicle weight classes (GV0 - GV9, GH0 - GH6) being constituted in consideration of the vehicle's equipment level and there being assigned to each weight class (GV0 - GV9, GH0 - GH6) a structural unit (2, 3) which is geared thereto and is installed on the vehicle (1), characterised in that:
o first the relevant vehicle weight is computed, taking account of individual weights stored in a data base and assigned to the various vehicle equipment elements, and
o thereafter the vehicle (1) is assigned to a weight class (GV0 - GV9, GH0 - GH6).

2. Method according to claim 1, characterised by subsequently determining the vehicle body level H_{V} and H_{H}, respectively based on the front and rear axle.

3. Method according to claim 1, characterised by subsequently actually determining the vehicle weight G_{V} and G_{H}, respectively based on the front and rear axle on a weighing machine.

4. Method according to claim 3, characterised by the fact that the measured values ascertained are considered as correction variables in computing the vehicle weight and thus in assigning following vehicles to a weight class.

## Revendications

1. Procédé de montage d'unités de construction dans un véhicule, en particulier de ressorts d'essieu, dont le dimensionnement et/ou la forme spatiale et/ou le matériau sont déterminés en fonction du poids du véhicule, où, en prenant en compte l'étendue de l'équipement du véhicule, une pluralité de classes de poids de véhicule (GV0 à GV9, GH0 à GH6) est constituée, et où à chaque classe poids (GV0 à GV9, GH0 à GH6) est associée une unité de construction (2, 3) conçue en fonction de celle-ci, et cette dernière étant montée sur le véhicule (1), caractérisé en ce que
• d'abord, on effectue la détermination, du poids de véhicule concerné par calcul, en utilisant des poids individuels lus dans une banque de données et associés aux différents éléments d'équipement de véhicule, et en ce que
• le véhicule (1) est ensuite associé à une classe de poids (GV0 à GV9, GH0 à GH6.)

2. Procédé selon la revendication 1, caractérisé par une détermination de hauteur H_{V} et H_{H} subséquente, se référant chaque fois à l'essieu avant et à l'essieu arrière.

3. Procédé selon la revendication 1, caractérisé par une détermination effective subséquente du poids de véhicule G_{V} et G_{H}, chaque fois rapportée à l'essieu avant et l'essieu arrière, sur une balance.

4. Procédé selon la revendication 3, caractérisé par le prise en compte des valeurs de mesure déterminées en tant que grandeurs de correction lors de la détermination par calcul du poids de véhicule et, ainsi, lors de l'association à des classes de poids des véhicules consécutifs.
